# EUROPEAN PATENT APPLICATION

(11) **EP 3 395 533 A1**
(43) Date of publication of application: **31.10.2018**
(21) Application number: 16878657.2
(22) Date of filing: 20.12.2016
(51) Int. Cl.: B29C 45/26, B29C 45/44

(54) **MOLD FOR INJECTION-MOLDING IMPELLER AND METHOD FOR INJECTION-MOLDING IMPELLER**

(30) Priority: 24.12.2015 JP 2015251152
(71) Applicant: Enplas Corporation, Kawaguchi-shi, Saitama 332-0034 (JP)
(72) Inventor: YAMAGUCHI, Tetsuo, Kawaguchi-shi Saitama 332-0034 (JP)
(74) Representative: Prinz & Partner mbB
(86) International application number: PCT/JP2016/087865
(87) International publication number: WO 2017/110768

(57) **Abstract**

PROBLEM TO BE SOLVED: To provide an injection molding method of an impeller that makes burrs be less likely to occur on a surface of a vane of the impeller.

SOLUTION: An injection molding method of an impeller is as follows. In an injection molding mold 2, a cavity 6 to shape an impeller 1 is formed on a cavity piece 5. The cavity piece 5 includes an inner piece portion 12 on which the cavity 6 is formed, and a support piece portion 13 that turnably supports the inner piece portion 12 and is movably mounted on a fixed-side mold 3. This cavity piece 5 is moved to a first mold separating position together with a movable-side mold 4. The inner piece portion 12 is formed such that a spiral pattern groove 17 to shape a plurality of spiral pattern vanes 16 of the impeller 1 constitutes a part of the cavity 6. When the movable-side mold 4 separates from the cavity piece 5 at the first mold separating position to move to a second mold separating position, the impeller 1 moves integrally with the movable-side mold 4 and separates from the inner piece portion 12 while turning the inner piece portion 12 such that the vane 16 slides and moves inside the spiral pattern groove 17 of the inner piece portion 12.

## Description

### TECHNICAL FIELD

The present invention relates to an injection molding mold of an impeller and an injection molding method of the impeller that ensure reduction in a production cost of the impeller.

### BACKGROUND ART

An impeller made of resin is formed such that a molten resin is injected into a mold cavity, and then, the molten resin injected into the mold cavity cools and hardens to be taken out from the mold cavity.

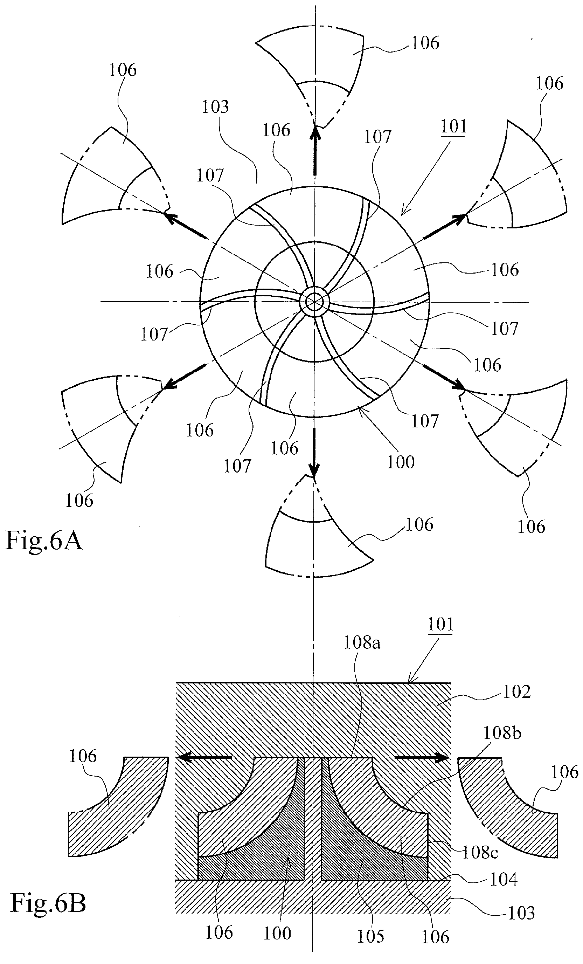

FIG. 6 is a view illustrating an injection molding mold 101 of such an impeller 100. FIG. 6A is a plan view of a second mold 103 illustrated by removing a first mold 102. FIG. 6B is a vertical cross-sectional view of the injection molding mold 101.

As shown in FIG. 6, in the injection molding mold 101 of the impeller 100, a cavity 105 is formed on a mold mating surface 104 side of the first mold 102 and the second mold 103, a plurality of inner pieces 106 are arranged on this cavity 105 so as to slidably move, and vanes 107 are formed of the molten resin that has flowed into clearances between the respective inner pieces 106. The respective inner pieces 106 are slid and moved to an outside in a radial direction of the impeller 100 after the first mold 102 separates from the second mold 103 (after mold opening). The respective inner pieces 106 are separated from the impeller 100 to ensure the separation of the impeller 100 and the second mold 103 (see Patent Document 1).

### PRIOR ART DOCUMENTS

### Patent Documents

Patent Document 1: Japanese Unexamined Utility Model Application Publication No. 1-76525 (especially, see description on 11th to 18th lines in the fourth page)

### DISCLOSURE OF THE INVENTION

### PROBLEMS TO BE SOLVED BY THE INVENTION

However, in the impeller 100 shown in FIG. 6, mold parting surfaces (division surfaces) 108a to 108c of the respective inner pieces 106 and the first mold 102 are positioned on surfaces of the vanes 107. Thus, burrs easily occur along surface ridgelines of the respective vanes 107. For example, in the impeller 100 used for a turbocharger, when the burr occurs on the surface ridgeline of the vane 107, this burr of the vane 107 interferes with flow of a fluid to decrease efficiency of the turbocharger. Therefore, in the impeller 100 shown in FIG. 6, the burrs that have occurred on the surfaces of the respective vanes 107 are removed by secondary processing such as polishing processing. Thus, there is a problem that the production cost is high.

Therefore, the present invention provides an injection molding mold of an impeller and an injection molding method of the impeller that can prevent burrs from occurring on a surface of a vane of the impeller and ensure reduction in a production cost needed for burr removal of the impeller.

### SOLUTIONS TO THE PROBLEMS

The present invention relates to an injection molding mold 2 of an impeller 1. The injection molding mold 2 of the impeller 1 according to the present invention includes a fixed-side mold 3, a movable-side mold 4, and a cavity piece 5 arranged between these fixed-side mold 3 and movable-side mold 4. Then, at a time of mold clamping to sandwich the cavity piece 5 by the fixed-side mold 3 and the movable-side mold 4, a cavity 6 to shape the impeller 1 is formed on the cavity piece 5. A gate 7 to inject the molten resin into the cavity 6 is formed on the fixed-side mold 3. The cavity piece 5 includes an inner piece portion 12 on which the cavity 6 is formed, and a support piece portion 13 that turnably supports the inner piece portion 12 and is movably mounted on the fixed-side mold 3. Then, the cavity piece 5 is configured to be moved along a first guide 10 to a first mold separating position together with the movable-side mold 4. The inner piece portion 12 is formed such that a spiral pattern groove 17 to shape a plurality of spiral pattern vanes 16 of the impeller 1 constitutes a part of the cavity 6. The movable-side mold 4 is separated from the cavity piece 5 at the first mold separating position to be moved to a second mold separating position along a second guide 11. The impeller 1 is configured to move integrally with the movable-side mold 4 to be separated from the inner piece portion 12 while turning the inner piece portion 12 such that the vane 16 slides and moves inside the spiral pattern groove 17 of the inner piece portion 12 when the movable-side mold 4 moves separately from the cavity piece 5.

The present invention relates to an injection molding method of an impeller 1 to shape the impeller 1 by injecting the molten resin into a cavity 6 of an injection molding mold 2. In the present invention, the injection molding mold 2 includes a fixed-side mold 3, a movable-side mold 4, and a cavity piece 5 arranged between these fixed-side mold 3 and movable-side mold 4. Then, at a time of mold clamping to sandwich the cavity piece 5 by the fixed-side mold 3 and the movable-side mold 4, a cavity 6 to shape the impeller 1 is formed on the cavity piece 5. A gate 7 to inject the molten resin into the cavity 6 is formed on the fixed-side mold 3. The cavity piece 5 includes an inner piece portion 12 on which the cavity 6 is formed, and a support piece portion 13 that turnably supports the inner piece portion 12 and is movably mounted on the fixed-side mold 3. Then, the cavity piece 5 is configured to be moved along a first guide 10 to a first mold separating position together with the movable-side mold 4. The inner piece portion 12 is formed such that a spiral pattern groove 17 to shape a plurality of spiral pattern vanes 16 of the impeller 1 constitutes a part of the cavity 6. The movable-side mold 4 is configured to be separated from the cavity piece 5 at the first mold separating position to be moved to a second mold separating position along a second guide 11. The impeller 1 is formed through (1) a first molding step of injecting the molten resin into the cavity 6 from the gate 7, (2) a second molding step of separating the cavity piece 5 from the fixed-side mold 3 together with the movable-side mold 4 to be separated from the gate 7 after the molten resin injected into the cavity 6 is cooled to harden, and (3) a third molding step of moving the impeller 1 integrally with the movable-side mold 4 to be separated from the inner piece portion 12 while turning the inner piece portion 12 such that the vane 16 slides and moves inside the spiral pattern groove 17 of the inner piece portion 12 when the movable-side mold 4 is separated from the cavity piece 5 to be moved toward the second mold separating position.

### EFFECTS OF THE INVENTION

The present invention can prevent the burrs from occurring on the surface of the vane of the impeller, thus reducing the production cost needed for the burr removal of the impeller.

### BRIEF DESCRIPTION OF THE DRAWINGS

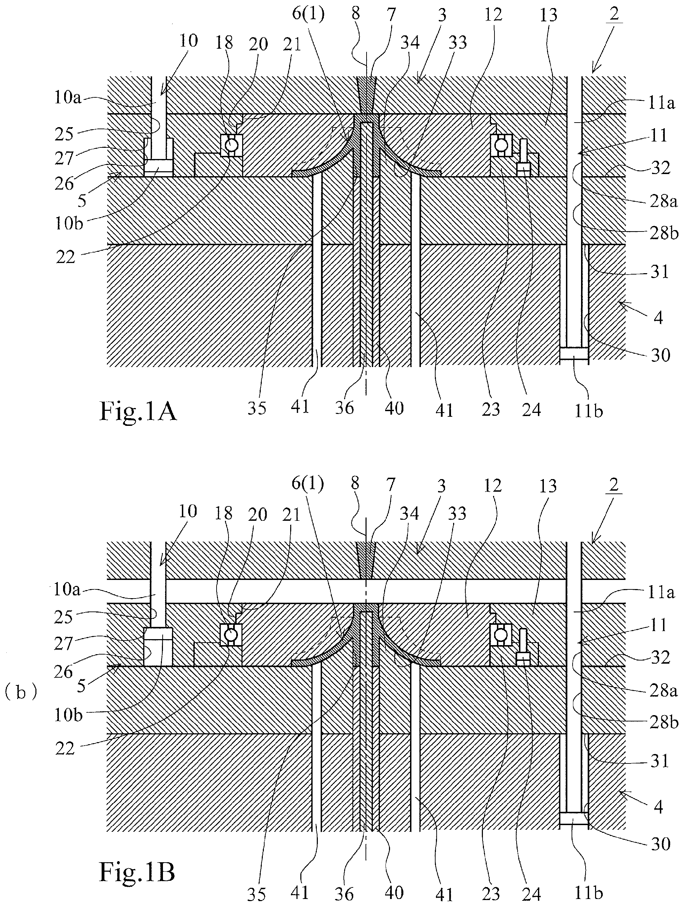

FIG. 1 are views illustrating an injection molding mold of an impeller according to an embodiment of the present invention, FIG. 1A is a cross-sectional view of the injection molding mold in a first molding step of the impeller, and FIG. 1B is a cross-sectional view of the injection molding mold in a second molding step of the impeller.

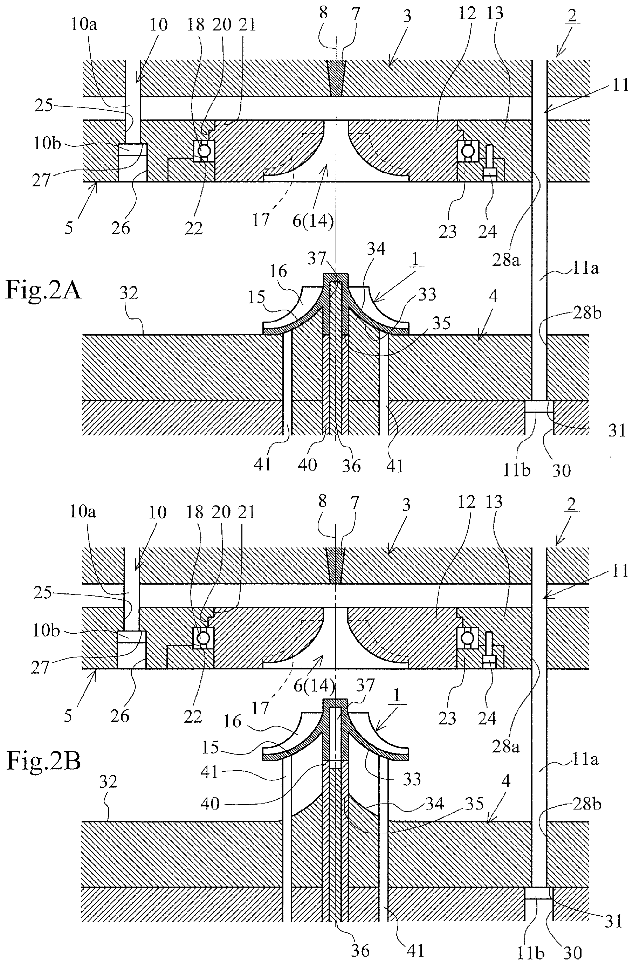

FIG. 2 are views illustrating the injection molding mold of the impeller according to the embodiment of the present invention, FIG. 2A is a cross-sectional view of the injection molding mold in a third molding step of the impeller, and FIG. 2B is a cross-sectional view of the injection molding mold illustrating an extracting step of the impeller.

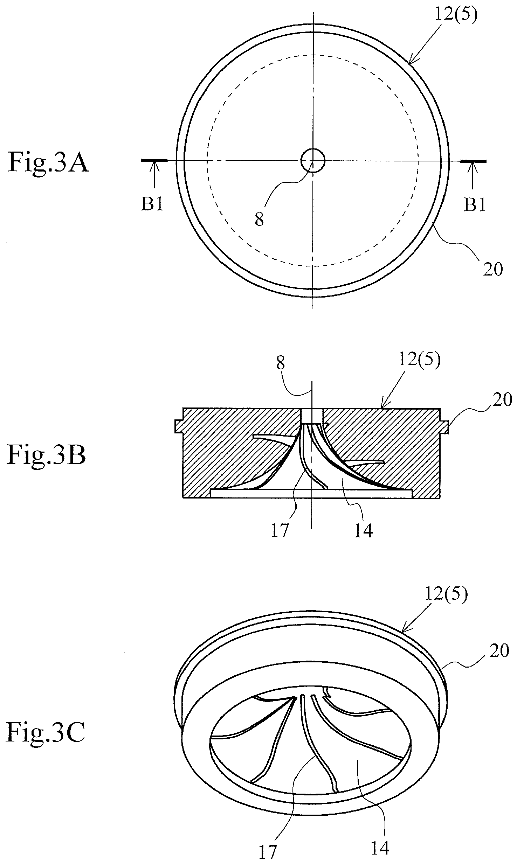

FIG. 3 are views illustrating an inner piece portion of the injection molding mold according to the embodiment of the present invention, FIG. 3A is a plan view of the inner piece portion, FIG. 3B is a cross-sectional view of the inner piece portion taken along a line B1-B1 in FIG. 3A, and FIG. 3C is a perspective view of a back surface side of the inner piece portion.

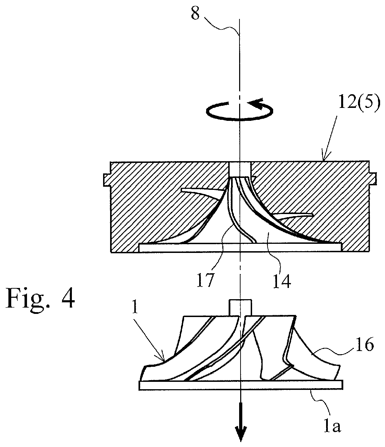

FIG. 4 is a view simplistically illustrating a separation state of the inner piece portion (the inner piece portion in cross-section) and the impeller.

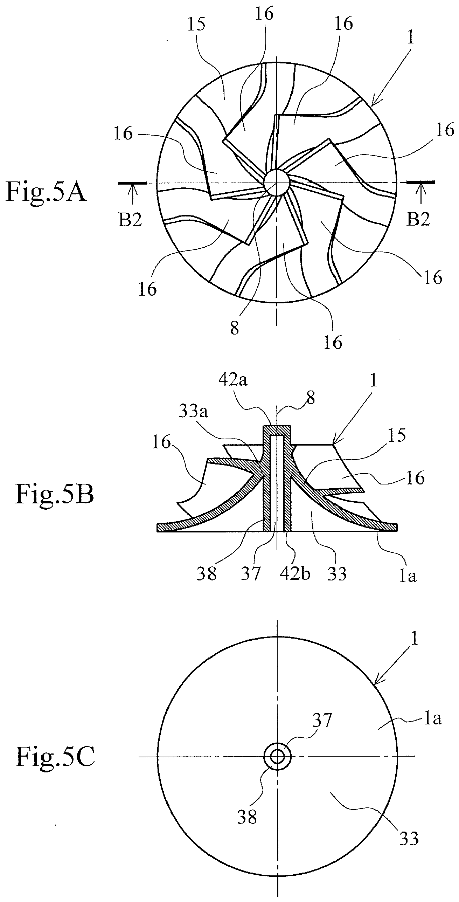

FIG. 5 are views illustrating the injection-molded impeller using the injection molding mold, FIG. 5A is a plan view of the impeller, FIG. 5B is a cross-sectional view of the impeller taken along a line B2-B2 in FIG. 5A, and FIG. 5C is a back surface view of the impeller.
FIG. 6 are views illustrating an injection molding mold of a conventional impeller, FIG. 6A is a plan view of a second mold and a plurality of inner pieces illustrated by removing a first mold, and FIG. 6B is a vertical cross-sectional view of the injection molding mold.

### DESCRIPTION OF PREFERRED EMBODIMENTS

Embodiments of the present invention are described in detail by reference to drawings hereinafter.

FIG. 1 and FIG. 2 are views illustrating an injection molding mold 2 of an impeller 1 according to the embodiment of the present invention. FIG. 1A is a cross-sectional view of the injection molding mold 2 in a first molding step of the impeller 1. FIG. 1B is a cross-sectional view of the injection molding mold 2 in a second molding step of the impeller 1. FIG. 2A is a cross-sectional view of the injection molding mold 2 in a third molding step of the impeller 1. FIG. 2B is a cross-sectional view of the injection molding mold 2 illustrating an extracting step of the impeller 1.

### (Injection Molding Mold)

As shown in FIG. 1 and FIG. 2, the injection molding mold 2 includes a fixed-side mold 3, a movable-side mold 4, and a cavity piece 5 arranged between these fixed-side mold 3 and movable-side mold 4. Then, as shown in FIG. 1A, the injection molding mold 2 is constituted such that an internal space of the cavity piece 5 becomes a cavity 6 to shape the impeller 1 at a time of mold clamping to sandwich the cavity piece 5 between the fixed-side mold 3 and the movable-side mold 4.

### (Fixed-side mold)

As shown in FIG. 1A, a gate 7 to inject a molten resin (for example, PEEK containing carbon fiber and PPS containing carbon fiber) into the cavity 6 is formed on the fixed-side mold 3. This gate 7, which is a pin gate formed to be positioned concentrically with a central axis 8 of the cavity 6, is configured to flow the molten resin toward an outer side in a radial direction of the cavity 6 from a center side of the cavity 6. A plurality of first guides 10 that guide the cavity piece 5 to move to a first mold separating position apart from the fixed-side mold 3 by a predetermined dimension are mounted around the central axis 8 on the fixed-side mold 3 (see FIG. 1B). A plurality of second guides 11 that guide the movable-side mold 4 to move to a second mold separating position apart from the first mold separating position further by the predetermined dimension are mounted around the central axis 8 on the fixed-side mold 3 (see FIG. 2). Central axes of the cavity piece 5, the impeller 1, and the gate 7 are concentric with the central axis 8 of the cavity 6, and represented as the central axis 8 for convenience.

### (Cavity Piece)

As shown in FIG. 1 and FIG. 2, the cavity piece 5 includes an inner piece portion 12 on which the cavity 6 is formed, and a support piece portion 13 that turnably supports the inner piece portion 12 and is movably mounted on the fixed-side mold 3. Then, this cavity piece 5 is configured to be moved along the first guide 10 and the second guide 11 to the first mold separating position together with the movable-side mold 4.

As shown in FIG. 1 to FIG. 3, the inner piece portion 12 has a circular shape in plan view, and a space 14 to be the cavity 6 is formed around the central axis 8. In the inner piece portion 12, a plurality of spiral pattern grooves 17 (its count is identical to a count of vanes 16) to form the spiral pattern vanes 16 of the impeller 1 are formed on an inner surface of the space 14 to shape an impeller main body 15. These spiral pattern grooves 17 are configured to constitute a part of the cavity 6. Then, this inner piece portion 12 is turnably supported to the support piece portion 13 via a bearing 18. This inner piece portion 12 has the circular shape in plan view, and a ring-shaped protrusion 20 is formed on an outer peripheral surface of the inner piece portion 12. This ring-shaped protrusion 20 of the inner piece portion 12 is configured to be sandwiched between a retainer protrusion 21 of the support piece portion 13 and the bearing 18. The bearing 18 is fitted to an inner peripheral surface of a bearing hole 22 of the support piece portion 13 and secured to the support piece portion 13 with a bearing securing plate 23. The bearing securing plate 23 has a hollow circular-plate shape and has a plurality of positions in a circumferential direction secured to the support piece portion 13 with screws 24. Such an inner piece portion 12 is positioned along the central axis 8 of the cavity piece 5 and turnably supported to the support piece portion 13 via the bearing 18.

A first guide hole 25 slidably engaged with a rod portion 10a of the first guide 10 secured to the fixed-side mold 3 is formed on the support piece portion 13, and a stopper-portion engaging hole 26 that slidably houses a stopper portion 10b formed on a distal end of the rod portion 10a of the first guide 10 is formed on the support piece portion 13. Then, the support piece portion 13 is configured such that the stopper-portion engaging hole 26 has a diameter larger than a diameter of the first guide hole 25, and the stopper portion 10b of the first guide 10 can be separated from the fixed-side mold 3 integrally with the inner piece portion 12 by being guided by the rod portion 10a of the first guide 10 until when being bumped against a bottom surface 27 of the stopper-portion engaging hole 26. A position where the stopper portion 10b of the first guide 10 is bumped against this bottom surface 27 of the stopper-portion engaging hole 26 of the support piece portion 13 will be the first mold separating position of the cavity piece 5. Then, this support piece portion 13 is held onto the first mold separating position such that the bottom surface 27 of the stopper-portion engaging hole 26 is pressed to the stopper portion 10b of the first guide 10 with a spring (not illustrated). The plurality of first guides 10 are arranged around the central axis 8 to be configured to smoothly slide and move the cavity piece 5. The stopper portion 10b of the first guide 10 has a diameter larger than a diameter of the rod portion 10a, and may be formed integrally with the rod portion 10a or may be formed separately from the rod portion 10a to be secured (for example, welded and screwed) to the rod portion 10a.

A second guide hole 28a slidably engaged with a rod portion 11a of the second guide 11 secured to the fixed-side mold 3 is formed on the support piece portion 13. The plurality of second guides 11 are formed around the central axis 8 to be configured to smoothly guide move of the cavity piece 5 and the movable-side mold 4.

### (Movable-Side Mold)

As shown in FIG. 1 and FIG. 2, the movable-side mold 4 is configured to be coupled to a driving device (not illustrated) to be guided by the second guide 11, thus smoothly moving from a mold clamping position (a position shown in FIG. 1A) to the second mold separating position (a position shown in FIG. 2) and smoothly moving from the second mold separating position to the mold clamping position. A second guide hole 28b slidably engaged with the rod portion 11a of the second guide 11 is formed on this movable-side mold 4, and a stopper-portion engaging hole 30 that slidably houses a stopper portion 11b formed on a distal end of the rod portion 11a of the second guide 11 is formed on this movable-side mold 4. Then, in this movable-side mold 4, the stopper-portion engaging hole 30 has a diameter larger than a diameter of the second guide hole 28b, and the stopper portion 11b of the second guide 11 is configured to move guided by the rod portion 11a of the second guide 11 until when being bumped against a bottom surface 31 of the stopper-portion engaging hole 30. This position where the stopper portion 11b of the second guide 11 is bumped against the bottom surface 31 of the stopper-portion engaging hole 30 in the movable-side mold 4 is the second mold separating position of the injection molding mold 2, and a dimension from the fixed-side mold 3 is far away from the first mold separating position, thus being a position where the impeller 1 can be taken out from between the cavity piece 5 held onto the first mold separating position and the movable-side mold 4. At this second mold separating position, the movable-side mold 4 is pressed to the stopper portion 11b of the second guide 11 by elastic force of the spring (not illustrated) to be held onto the second mold separating position.

As shown in FIG. 1B, FIG. 2, and FIG. 4, the movable-side mold 4 separates from the cavity piece 5 at the first mold separating position on the way to the second mold separating position from the mold clamping position to move to the second mold separating position integrally with the impeller 1. The impeller 1 that moves integrally with this movable-side mold 4 smoothly leaves the inner piece portion 12 of the cavity piece 5 such that the spiral pattern vane 16 slides and moves inside the spiral pattern groove 17 of the inner piece portion 12 of the cavity piece 5 to turn the inner piece portion 12.

As shown in FIG. 1, FIG. 2, and FIG. 5, the movable-side mold 4 includes a truncated cone shaped portion 34 bulging into a taper shape to shape a punching portion 33 on a back surface 1a side of the impeller 1, an annular recess 35 positioned radially medial to this truncated cone shaped portion 34, and a shaft mold portion 36 positioned radially medial to this annular recess 35, on a surface 32 side opposed to the cavity piece 5. The shaft mold portion 36 is a round-bar-shaped part centering the central axis 8 and is configured to shape a shaft hole 37 positioned on the center of the impeller 1. The annular recess 35 is configured to shape a cylindrically-shaped boss 38 bulging to the back surface 1a side of the impeller 1. The truncated cone shaped portion 34 is configured to shape the punching portion 33 having a truncated cone shape on the back surface 1a side of the impeller 1.

As shown in FIG. 1, in the movable-side mold 4, an ejector sleeve 40 is arranged to slidably move on a position on an outer peripheral side of the shaft mold portion 36 and corresponding to the annular recess 35, and a plurality of ejector pins 41 are arranged around the central axis 8 to slidably move. As shown in FIG. 2B, this ejector sleeve 40 disposed on the movable-side mold 4 presses the cylindrically-shaped boss 38 of the impeller 1 to a side of the cavity piece 5 to extrude the cylindrically-shaped boss 38 of the impeller 1 from the annular recess 35 of the movable-side mold 4 in a state where the movable-side mold 4 has moved to the second mold separating position. As shown in FIG. 2B, the ejector pin 41 disposed on the movable-side mold 4 presses near an outside end in a radial direction of the back surface 1a of the impeller 1 to the cavity piece 5 side to separate (extrude) the impeller 1 from the movable-side mold 4 in the state where the movable-side mold 4 has moved to the second mold separating position.

### (Impeller)

FIG. 5 is a view illustrating the impeller 1 injection-molded with the above-described injection molding mold 2. FIG. 5A is a plan view of the impeller 1. FIG. 5B is a cross-sectional view of the impeller 1 taken along a line B2-B2 in FIG. 5A. FIG. 5C is a back surface view of the impeller 1.

As shown in FIG. 5, the impeller 1 is formed into an approximately truncated cone shape where one end side 42a (an upper end side in FIG. 5B) along the central axis 8 (a rotation axis) has an outer diameter smaller than an outer diameter of another end side 42b (a lower end side in FIG. 5B) along the central axis 8. Then, this impeller 1 has the impeller main body 15 having an approximately truncated cone shape, and the plurality of vanes 16 formed at regular intervals along a circumferential direction of an external surface of this impeller main body 15. In the impeller main body 15, the approximately truncated cone shaped punching portion 33 is formed on the back surface (lower end surface) 1a side. This punching portion 33 is formed around the central axis 8 of the impeller 1 to be positioned between the impeller main body 15 and the cylindrically-shaped boss 38, thus having an outer diameter dimension gradually increasing in a reverse taper shape from a deepest portion 33a toward the back surface 1a side. This punching portion 33 has a radially inward end on which the cylindrically-shaped boss 38 is formed. This boss 38 extends from the deepest portion 33a of the punching portion 33 to the back surface 1a along the central axis 8. The shaft hole 37 is formed along the central axis 8 at a center portion of the impeller main body 15. The shaft hole 37 is a closed-bottom hole opening to the back surface 1a side of the impeller main body 15, and a rotation shaft (not illustrated) will be fitted to the shaft hole 37.

As shown in FIG. 5, the vane 16 of the impeller 1, after being formed into a spiral pattern having a predetermined lead angle around the central axis 8 of the impeller 1, has a shape such that an outer peripheral surface side in the radial direction is scraped off so as to match an inner surface shape of a case (not illustrated) where the impeller 1 is housed. Then, this vane 16 of the impeller 1 is shaped with the spiral pattern groove 17 (a part of the cavity 6) engraved on the inner piece portion 12 at the time of the injection molding. Thus, the inner piece portion 12 is not divided by respective vanes 16 as in the conventional example, thus not having the configuration where the mold parting surfaces 108a to 108c of the inner piece 106 are positioned on the surface of the vane 107 as in the conventional example (see FIG. 6). Accordingly, the burrs do not occur on the surface of the vane 16. As a result, the impeller 1 injection-molded using the injection molding mold 2 according to the embodiment eliminates a need for a deburring work as after processing to reduce man hours in the production, thus reducing the production cost.

### (Injection Molding Method of Impeller)

The following describes an injection molding method of the impeller 1 using the injection molding mold 2 according to the embodiment with reference to FIG. 1 to FIG. 5.

As shown in FIG. 1A, in a mold clamping state where the inner piece portion 12 of the cavity piece 5 contacts the fixed-side mold 3 and the movable-side mold 4 contacts the inner piece portion 12 of the cavity piece 5, the cavity 6 to shape the impeller 1 inside the inner piece portion 12 is formed, and the molten resin is injected into this cavity 6 from the gate 7 of the fixed-side mold 3 (a first molding step). In this first molding step, the molten resin injected into the cavity 6 from the gate 7 smoothly flows from a small-diameter part side positioned on the one end side 42a along the central axis 8 of the impeller 1 to a large-diameter part side positioned on the other end side 42b along the central axis 8 of the impeller 1. Therefore, the injection molding method of the impeller 1 according to the embodiment improves filling-up efficiency into the cavity 6 (especially, a part to shape the vane 16), compared with, for example, a case where the gate 7 is arranged so that the molten resin flows from the large-diameter part side positioned on the other end side 42b along the central axis 8 of the impeller 1 to the small-diameter part side positioned on the one end side 42a along the central axis 8 of the impeller 1. The gate 7 of the injection molding mold 2 is arranged on the small-diameter part side of the one end side 42a along the central axis 8 of the impeller 1. This can sufficiently add pressure keeping up to an end of the vane 16 of the large-diameter part positioned on the other end side 42b along the central axis 8 of the impeller 1. As a result, the injection molding method of the impeller 1 using the injection molding mold 2 according to the embodiment ensures production of the high-accuracy impeller 1.

Next, after the molten resin injected into the cavity 6 is cooled to harden in the pressure keeping state, as shown in FIG. 1B, the cavity piece 5 and the movable-side mold 4 are integrally separated from the fixed-side mold 3 to separate the impeller 1 inside the cavity 6 (the resin hardened in the cavity 6) from the resin inside the gate 7 (a second molding step). Then, the cavity piece 5 and the movable-side mold 4 integrally move from the mold clamping position in FIG. 1A to the first mold separating position in FIG. 1B.

In this second molding step, the impeller 1 made of the resin cooled and hardened inside the cavity 6 has a contraction percentage larger than those of the metallic cavity piece 5 and movable-side mold 4, thus generating a clearance between the vane 16 and the spiral pattern groove 17. Thus, the impeller main body 15 fastens the shaft mold portion 36 of the movable-side mold 4. In this second molding step, the vane 16 of the impeller 1 is formed in the spiral pattern groove 17 of the inner piece portion 12. Thus, the mold parting surfaces as in the conventional example are not positioned on the surface, thus not generating the burrs on the surface.

Next, after the cavity piece 5 has moved to the first mold separating position together with the movable-side mold 4, the movable-side mold 4 separates from the cavity piece 5 to move toward the second mold separating position. Then, the impeller main body 15 of the impeller 1 moves with the movable-side mold 4 in the state where the impeller main body 15 fastens the shaft mold portion 36 of the movable-side mold 4, and the spiral pattern vane 16 of the impeller 1 slides and moves inside the spiral pattern groove 17 of the inner piece portion 12. Thereby, as shown in FIG. 1, FIG. 2, and FIG. 4, the inner piece portion 12 of the cavity piece 5 is turned by the vane 16 of the impeller 1 that moves integrally with the movable-side mold 4, thus being separated from the impeller 1 that moves integrally with the movable-side mold 4 (a third molding step).

Next, as shown in FIG. 2A, after the movable-side mold 4 has moved to the second mold separating position, the impeller 1 is pressed by the ejector sleeve 40 and the ejector pin 41 housed in the movable-side mold 4 to be separated from the movable-side mold 4, thus being taken out from the injection molding mold 2 (see FIG. 2B).

### (Effect of Embodiment)

The embodiment as described above can prevent the burrs from occurring on the surface of the vane 16 of the impeller 1 to ensure the reduction in the production cost needed for the burr removal of the impeller 1.

### (Other Embodiment)

In above-described embodiment, the gate 7 of the fixed-side mold 3 is exemplified as the pin gate. However, the gate 7 is not limited to this, and may be a ring gate or a multipoint gate.

### DESCRIPTION OF REFERENCE SIGNS

- 1:: Impeller
- 2:: Injection molding mold
- 3:: Fixed-side mold
- 4:: Movable-side mold
- 5:: Cavity piece
- 6:: Cavity
- 7:: Gate
- 10:: First guide
- 11:: Second guide
- 12:: Inner piece portion
- 13:: Support piece portion
- 16:: Vane
- 17:: Spiral pattern groove

## Claims

1. An injection molding mold of an impeller, comprising:
a fixed-side mold;
a movable-side mold; and
a cavity piece arranged between the fixed-side mold and the movable-side mold, wherein:
at a time of mold clamping to sandwich the cavity piece by the fixed-side mold and the movable-side mold, a cavity to shape the impeller is formed on the cavity piece,
a gate to inject a molten resin into the cavity is formed on the fixed-side mold,
the cavity piece includes:
an inner piece portion on which the cavity is formed; and
a support piece portion that turnably supports the inner piece portion and is movably mounted on the fixed-side mold,
the cavity piece is moved along a first guide to a first mold separating position together with the movable-side mold,
the inner piece portion is formed such that a spiral pattern groove to shape a plurality of spiral pattern vanes of the impeller constitutes a part of the cavity,
the movable-side mold is separated from the cavity piece at the first mold separating position to be moved to a second mold separating position along a second guide, and
the impeller moves integrally with the movable-side mold and is separated from the inner piece portion while turning the inner piece portion such that the vane slides and moves inside the spiral pattern groove of the inner piece portion when the movable-side mold moves separately from the cavity piece.

2. The injection molding mold of the impeller according to claim 1, wherein
after the movable-side mold moves to the second mold separating position, the impeller is pressed by an ejector pin housed in the movable-side mold to be separated from the movable-side mold.

3. The injection molding mold of the impeller according to claim 1 or 2, wherein:
the impeller is formed such that the vane has an outer diameter dimension increasing from one end side in an axial direction of a rotation axis toward another end side in the axial direction, and
the gate is arranged on the one end side in the axial direction of the impeller.

4. An injection molding method of an impeller that injects a molten resin into a cavity of an injection molding mold to shape the impeller, wherein:
the injection molding mold includes:
a fixed-side mold;
a movable-side mold; and
a cavity piece arranged between the fixed-side mold and the movable-side mold,
at a time of mold clamping to sandwich the cavity piece by the fixed-side mold and the movable-side mold, a cavity to shape the impeller is formed on the cavity piece,
a gate to inject a molten resin into the cavity is formed on the fixed-side mold,
the cavity piece includes:
an inner piece portion on which the cavity is formed; and
a support piece portion that turnably supports the inner piece portion and is movably mounted on the fixed-side mold,
the cavity piece is moved along a first guide to a first mold separating position together with the movable-side mold,
the inner piece portion is formed such that a spiral pattern groove to shape a plurality of spiral pattern vanes of the impeller constitutes a part of the cavity,
the movable-side mold is configured to be separated from the cavity piece at the first mold separating position to be moved to a second mold separating position along a second guide, and
the impeller is formed through:
a first molding step of injecting the molten resin into the cavity from the gate;
a second molding step of separating the cavity piece from the fixed-side mold together with the movable-side mold to be separated from the gate after the molten resin injected into the cavity is cooled to harden; and
a third molding step of moving the impeller integrally with the movable-side mold to be separated from the inner piece portion while turning the inner piece portion such that the vane slides and moves inside the spiral pattern groove of the inner piece portion when the movable-side mold is separated from the cavity piece to be moved toward the second mold separating position.

5. The injection molding method of the impeller according to claim 4, wherein after the movable-side mold moves to the second mold separating position, the impeller is pressed by an ejector pin housed in the movable-side mold to be separated from the movable-side mold.

6. The injection molding method of the impeller according to claim 4 or 5, wherein:
the impeller is formed such that the vane has an outer diameter dimension increasing from one end side in an axial direction of a rotation axis toward another end side in the axial direction, and
the gate is arranged on the one end side in the axial direction of the impeller.
